# EUROPÄISCHE PATENTSCHRIFT

(11) **EP 1 582 125 B1**
(45) Veröffentlichungstag und Bekanntmachung des Hinweises auf die Patenterteilung: **07.05.2008**
(21) Anmeldenummer: 05102626.8
(22) Anmeldetag: 04.04.2005
(51) Int. Cl.: A47J 31/057, A47J 31/44

(54) **Kaffeemaschine und Verfahren zum Anschliessen einer Leitung**
Coffee machine and method for connecting a pipe
Machine à café et procédé pour relier un conduit

(30) Priorität: 02.04.2004 DE 102004016994
(43) Veröffentlichungstag der Anmeldung: 05.10.2005
(73) Patentinhaber: BSH Bosch und Siemens Hausgeräte GmbH, 81739 München (DE)
(72) Erfinder: Beutlrock, Maximilian, 83361 Kienberg (DE); Jäger, Harald, 83349 Palling-Freutsmoos (DE); Stief, Peter, 83329 Waging am See (DE)

(56) Entgegenhaltungen:
- DE-A1- 3 329 546
- DE-A1- 3 703 864
- DE-A1- 3 709 268
- US-A- 5 477 775

## Beschreibung

Die Erfindung bezieht sich auf eine Kaffeemaschine mit einer Leitung, die einen durch Biegung bewirkten Krümmungsabschnitt aufweist. Die Erfindung betrifft ferner ein Verfahren zum Anschließen einer Leitung.

Viele Kaffeemaschinen weisen Leitungen, wie beispielsweise Wasserleitungen, auf, die zum Anschluss an entsprechende Bauteile mit einem Krümmungsabschnitt versehen sind. Diese Krümmungsabschnitte werden zur Montageerleichterung häufig durch ein Biegen der Leitung während der Montage erzeugt. Ein solches Verfahren wird zum Beispiel in Dokument DE 3 329 546 A beschrieben. Dabei kann es jedoch passieren, dass unbeabsichtigt ein Knick entsteht, der sich negativ auf die Durchflussleistung der Leitung auswirkt. Dies passiert insbesondere dann, wenn in relativ engen Bauräumen eine scharfe Krümmung um beispielsweise 90° erzeugt werden muss, wie dies beispielsweise bei einem Heizungsschlauch einer Kaffeemaschine der Fall ist, der die Verbindung zwischen der Heizung der Kaffeemaschine und dem Überlauf herstellt.

Der Erfindung liegt die Aufgabe zugrunde, eine Kaffeemaschine, und ein Verfahren zum Anschließen einer Leitung zu schaffen, bei der die negativen Auswirkungen einer starken Krümmung vermindert werden.

Die erste Aufgabe wird durch die im Anspruch 1 angegebenen Merkmale gelöst.

Die Erfindung basiert auf der Feststellung, dass ein Knick in einer Strömungsmittel-Leitung den Querschnitt und demzufolge die äußeren Abmessungen der Leitung verändert, was bei einer normalen, gleichmäßigen Krümmung nicht der Fall ist. Durch die Erfindung wird eine Druckeinrichtung geschaffen, die auf diese veränderten Abmessungen einwirkt und bestrebt ist, diese Abmessungsveränderungen rückgängig zu machen und demzufolge der Knickbildung entgegenzuwirken bzw. die Knickbildung abzuschwächen.

Dabei wirkt die Druckeinrichtung bevorzugt quer zur Krümmungsrichtung auf die Leitung ein, da an dieser Stelle erfahrungsgemäß eine Vergrößerung der Breite der Leitung zu beobachten ist. Es ist jedoch auch möglich, die Druckeinrichtung an der Innenseite der Krümmung beidseitig der Knickbildung angreifen zu lassen.

Zweckmäßigerweise enthält die Druckeinrichtung zwei gegenüberliegende, eine Durchtrittsöffnung für die Leitung begrenzende Druckflächen; es sind jedoch auch andere geometrische Ausgestaltungen, beispielsweise Druckteile wie Walzen oder Kugeln mit linearen oder punktförmigen Berührungsflächen denkbar.

Eine konstruktiv relativ einfache Lösung einer Druckeinrichtung ist es, den Abstand der Druckelemente so zu bemessen, dass er kleiner ist als die zu erwartende Durchmesservergrößerung der Leitung beim Auftreten eines Knicks, so dass bei der Montage der Leitung gleichzeitig und ohne weitere Vorkehrungen der gewünschte Druck ausgeübt werden kann.

Ist die Durchtrittsöffnung an einer quer zu den Druckelementen verlaufenden Seite offen, so kann der Druck auf einfache Weise dadurch ausgeübt werden, dass der Krümmungsabschnitt durch die offene Seite in die Durchtrittsöffnung hineingedrückt wird, was die Montage weiter erleichtert.

Der Abstand der Druckelemente kann auf die Querschnittsabmessungen der Leitung und/oder die zu erwartenden Abmessungsänderungen des Querschnitts bei der Herstellung des Krümmungsabschnittes eingestellt werden, was entweder vorab passiert oder durch relativ zueinander bewegbare Druckelemente auch noch während der Montage verwirklicht werden kann. Letztere Lösung ist insbesondere dann zweckmäßig, wenn die mit der Druckeinrichtung versehene Durchgangsöffnung umfangsseitig vollständig geschlossen ist.

Die zweite Aufgabe der Erfindung wird gelöst durch ein Verfahren zum Anschließen einer Leitung in einer Kaffeemaschine an ein Bauteil, wobei der Anschluss über einen Krümmungsabschnitt erfolgt, wobei die Leitung zunächst zum Krümmungsabschnitt gebogen und anschließend zum Entfernen eines Knicks im Krümmungsabschnitt quer zur Längsrichtung gedrückt wird.

Ein Ausführungsbeispiel einer erfindungsgemäßen Kaffeemaschine wird nachfolgend anhand der Zeichnungen näher erläutert.
Es zeigen:
- Fig. 1: eine erfindungsgemäß ausgebildete Kaffeemaschine in schematischer, teilweise geschnittener Darstellung,
- Fig. 2: eine perspektivische Draufsicht auf die Druckeinrichtung,
- Fig. 3: ein Teil einer Leitung im Bereich eines Knicks, und
- Fig. 4: den Schnitt IV-IV aus Fig. 3.

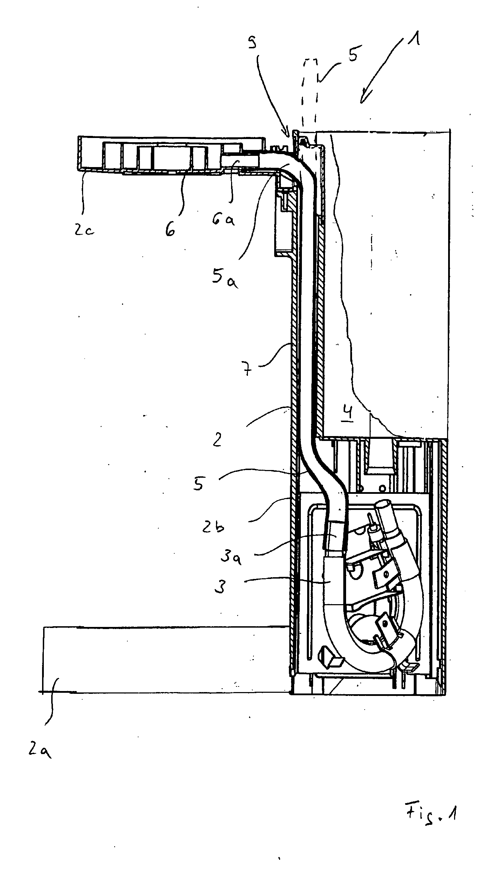

Fig. 1 zeigt in schematischer und teilweise geschnittener Darstellung eine Kaffeemaschine 1 als bevorzugtes Ausführungsbeispiel. Die Kaffeemaschine 1 umfasst ein Gehäuse 2 mit einem Sockel 2a, einem senkrechten Träger 2b und einem Überlauf 2c. Am und im Gehäuse 2 sind die üblichen Bestandteile einer Kaffeemaschine 1 untergebracht, wobei nachfolgend nur die für die Erfindung wesentlichsten Merkmale beschrieben werden sollen.

Die Kaffeemaschine 1 enthält eine Heizungseinrichtung 3 für das Brühwasser, die im vorliegenden Ausführungsbeispiel als Durchlauferhitzer ausgebildet ist. Die Heizung 3 ist in nicht beschriebener Weise mit einem Wasservorratstank 4 und, in Fig. 1 dargestellt, über eine Leitung 5 mit dem Überlauf 2c, insbesondere einem im Überlauf 2c angeordneten Wasserverteiler 6 verbunden, wobei die Leitung 5 an einer Seite auf einen Anschlussstutzen 3a der Heizung 3 und auf der anderen Seite auf einen Anschlussstutzen 6a des Überlaufs 2c geschoben wurde.

Die Leitung 5 besteht aus einem biegbaren Material, wie beispielsweise ein für derartige Strömungsmittelleitungen üblicherweise eingesetzter Kunststoff, und ist bevorzugt als flexibler Schlauch aus Kunststoff ausgebildet, wie er als Steigleitung bei Kaffeemaschinen oder Wasserleitung für die verschiedensten Zwecke in Hausgeräten eingesetzt wird.

Die Heizung 3 ist bei der Kaffeemaschine 1 im unteren Bereich des Trägers 2b untergebracht, während der Wassertank 4 im oberen Bereich vorgesehen ist. Für ein möglichst großes Aufnahmevolumen des Wassertanks 4 sollte dieser einen überwiegenden Teil des Querschnitts des Träges 2b einnehmen, so dass die Leitung 5 im beengten Bauraum zwischen dem Wassertank 4 und einer dem Überlauf 2c zugewandten Wandung 7 des Trägers 2b untergebracht werden muss. Weiterhin muss aus herstellungstechnischen Gründen der Anschlussstutzen 6a zum Verteiler 6 im Wesentlichen waagerecht angeordnet sein, so dass die Leitung 5 zum Anschluss an den Anschlussstutzen 6a einen Krümmungsabschnitt 5a benötigt, der im dargestellten Ausführungsbeispiel über etwa 90° reicht. Dieser Krümmungsabschnitt 5a wird während der Montage der Leitung 5 durch Biegen der Leitung 5 erzeugt.

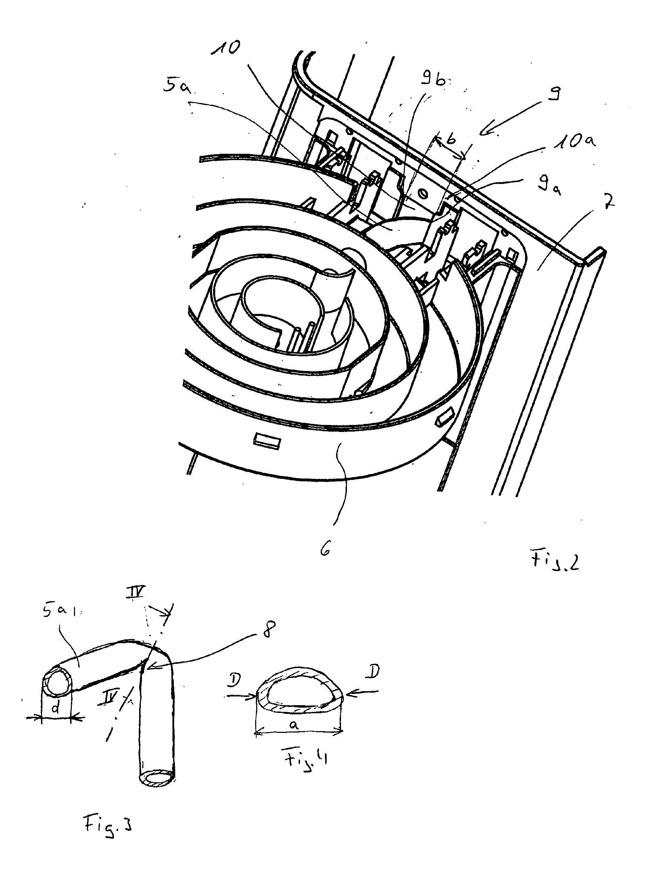

Beim Biegen der Leitung 5 ist es jedoch oft nicht zu vermeiden, dass sich im Krümmungsabschnitt 5a der in Fig. 3 dargestellte Knick 8 ausbildet, in dem der Querschnitt der Leitung 5 annähernd die in Fig. 4 dargestellte Form annimmt, d.h. der Querschnitt verändert sich von einer ursprünglich kreisrunden Form mit einem Durchmesser d in eine längsovale Form, wobei die längere Abmessung a quer zur Krümmungsrichtung verläuft. Der Querschnitt kann sich im ungünstigsten Falle so weit verringern, dass die Abmessung a der Hälfte des Außenumfangs entspricht, d.h. zwei gegenüberliegende Seiten des Querschnitts direkt aufeinanderliegen. Es ist leicht einzusehen, dass durch diesen Knick 8 die Durchströmungseigenschaften der Leitung 5 zumindest nachteilig beeinflusst und im schlimmsten Falle eine Durchströmung unmöglich gemacht wird.

Um dies zu vermeiden, ist bei der erfindungsgemäßen Kaffeemaschine eine Druckeinrichtung 9 vorgesehen, die im Bereich des Krümmungsabschnittes 5a und bevorzugt an oder nahe derjenigen Stelle angeordnet ist, wo das Auftreten eines Knicks 8 am wahrscheinlichsten ist, d.h. meist in der Mitte des Krümmungsabschnittes 5a.

Durch die Druckeinrichtung 9 kann auf die Leitung 5 quer zur Längserstreckung der Leitung 5 ein Druck ausgeübt werden, wobei dieser Druck bevorzugt quer zur Krümmungsrichtung, d.h. seitlich am Krümmungsabschnitt 5a angreift, wie dies durch die Pfeile D in Fig. 4 gezeigt ist. Durch diesen Druck wird der Querschnittsvergrößerung a entgegengewirkt und der ursprüngliche, im Wesentlichen kreisförmige Querschnitt im Krümmungsabschnitt 5a bzw. im Bereich des Knickes 8 vollständig oder zumindest teilweise wieder hergestellt, so dass die Durchströmung gewährleistet wird.

Die Druckeinrichtung 9 enthält zu diesem Zweck zwei sich in einem Abstand b (Fig. 2) gegenüberliegende, feststehende Druckelemente 9a und 9b, die eine Durchtrittsöffnung 10 für die Leitung 5 an denjenigen Seiten begrenzen, von denen her der Druck D ausgeübt werden soll. Im dargestellten Ausführungsbeispiel sind die Druckelemente 9a, 9b als Druckflächen ausgebildet, die die gegenüberliegenden Begrenzungsflächen einer gabel- oder U-förmigen Durchtrittsöffnung 10 bilden, die an einer quer zu den Druckelementen 9a, 9b verlaufenden Umfangsseite 10a offen ist, so dass die Leitung 5 durch die offene Seite 10a zwischen die Druckflächen 9a, 9b gedrückt werden kann.

Der Abstand b zwischen den Druckelementen 9a, 9b ist kleiner als die Abmessung a im Krümmungsabschnitt 5a, aber bevorzugt größer oder gleich einem Außendurchmesser d des kreisförmigen Querschnitts der Leitung 5. Wird somit die Leitung während der Montage zwischen die Druckelemente 9a, 9b gedrückt, so wird durch den Druck D der kreisförmige Querschnitt der Leitung auch im Bereich eines eventuellen Knicks 8 im Wesentlichen wieder hergestellt.

Bei der Montage der Leitung 5 in der Kaffeemaschine 1 wird diese zunächst mit dem Anschlussstutzen 3a der Heizung 3 verbunden und in den Platz zwischen dem Wassertank und der Wand 7 eingefädelt. Ist dies geschehen, so steht, wie in Fig. 1 gestrichelt angedeutet, das an den Anschlussstutzen 6a anzuschließende Ende der Leitung 5 zunächst noch senkrecht nach oben. Dann wird die Leitung 5 zum Krümmungsabschnitt 5a so weit gebogen, dass sie an den Anschlussstutzen 6a angeschlossen werden kann. Dabei wird die Leitung 5 durch die offene Seite 10a der Durchtrittsöffnung 10 zwischen die Druckelemente 9a und 9b gepresst, wodurch das Auftreten eines Knicks 8 verhindert bzw. ein bereits entstandener Knick zumindest teilweise wieder eliminiert wird.

Der Abstand b zwischen den Druckflächen 9a, 9b wird, bei feststehenden Druckelementen 9a, 9b, vorab auf den Durchmesser d bzw. die zu erwartende Abmessung a eingestellt. Es ist jedoch auch möglich, die Druckeinrichtung 9 einstellbar auszubilden, indem beispielsweise wenigstens eines der Druckelemente 9a oder 9b relativ zum anderen Druckelement bewegbar und bevorzugt in der gewünschten Stellung arretierbar ausgebildet wird. Dies ist besonders dort zweckmäßig, wo die Durchtrittsöffnung 10 umfangsseitig geschlossen ist, so dass die Leitung 5 eingefädelt bzw. hindurchgeschoben werden muss. Dies wird erleichtert, wenn die Durchtrittsöffnung 10 anfänglich größer ist als der Durchmesser d, und die Druckelemente 9a, 9b erst nach dem Durchstecken der Leitung 5 unter Ausübung eines seitlichen Drucks D auf den Abstand b gebracht und gegebenenfalls in dieser Stellung arretiert werden.

In Abwandlung der beschriebenen und gezeichneten Ausführungsbeispiele kann die Erfindung bei jeder Art Hausgerät eingesetzt werden, wo eine Leitungsverbindung über eine biegbare Leitung und über einen Krümmungsabschnitt vorgenommen werden muss. Die Druckeinrichtung kann an die tatsächlichen Verhältnisse im Gerät angepasst werden, beispielsweise können punkt- oder linienförmig auf die Leitung einwirkende Druckelemente vorgesehen sein. Unter Umständen kann ein Druck auch aus dem Krümmungsradius heraus auf die Leitung aufgebracht werden, dann jedoch bevorzugt vor und/oder hinter dem Knick.

## Patentansprüche

1. Kaffeemaschine (1) mit einer Leitung (5), die einen durch Biegung bewirkten Krümmungsabschnitt (5a) aufweist, wobei im Bereich des Krümmungsabschnitts (5a) eine quer zur Längsrichtung auf die Leitung (5) einwirkende Druckeinrichtung (9) vorgesehen ist.

2. Kaffeemaschine nach Anspruch 1, bei der die Druckeinrichtung (9) quer zur Krümmungsrichtung auf die Leitung (5) einwirkt.

3. Kaffeemaschine nach Anspruch 1 oder 2, bei der die Druckeinrichtung (9) zwei gegenüberliegende, eine Durchtrittsöffnung (10) für die Leitung (5) begrenzende Druckelemente (9a, 9b), insbesondere Druckflächen, enthält.

4. Kaffeemaschine nach Anspruch 3, bei der der Abstand (b) der Druckelemente (9a, 9b) zueinander geringer ist als die Breite (a) des durch die Öffnung (10) hindurchtretenden Krümmungsabschnitts (5a).

5. Kaffeemaschine nach Anspruch 4, bei der die Druckeinrichtung (9) eine durch zwei gegenüberliegende, feststehende Druckelemente (9a, 9b) begrenzte Durchtrittsöffnung (10) enthält, die an einer quer zu den Druckelementen verlaufenden Umfangseite (10a) zum Einlegen des Krümmungsabschnitts (5a) offen ist.

6. Kaffeemaschine nach Anspruch 4, bei der der Abstand (b) der Druckelemente (9a, 9b) einstellbar ist.

7. Kaffeemaschine nach Anspruch 6, bei der wenigstens eines der Druckelemente (9a, 9b) in Richtung auf das andere Druckelement (9b, 9a) bewegbar ist.

8. Kaffeemaschine nach einem der Ansprüche 1 bis 7, die eine Vorrichtung zum Herstellen eines Brühgehäuses ist, die Vorrichtung eine Heizung (3) und einen Überlauf (2c) aufweist, die Heizung (3) durch die Leitung (5) mit dem Überlauf (2) verbunden ist.

9. Verfahren zum Anschließen einer Leitung (5) in einer Kaffeemaschine (1) an ein Bauteil (2c), wobei der Anschluss über einen Krümmungsabschnitt (5a) erfolgt, wobei die Leitung (5) zunächst zum Krümmungsabschnitt (5a) gebogen und anschließend zum Entfernen eines Knicks (8) im Krümmungsabschnitt (5a) quer zur Längsrichtung gedrückt wird.

10. Verfahren nach Anspruch 10, bei dem der Krümmungsabschnitt (5a) zum Entfernen des Knicks (8) in eine Durchgangsöffnung (10) gedrückt wird, die schmaler als der Krümmungsabschnitt (5a) an dieser Stelle ist.

## Claims

1. Coffee machine (1) with a conduit (5) which has a curved section (5a) formed by bending, wherein a pressure device (9) acting on the conduit (5) transversely to the longitudinal direction is provided in the region of the curved section (5a).

2. Coffee machine according to claim 1, in which the pressure device (9) acts on the conduit (5) transversely to the direction of curvature.

3. Coffee machine according to claim 1 or 2, in which the pressure device (9) includes two opposite pressure elements (9a, 9b), particularly pressure surfaces, bounding a passage opening (10) for the conduit (5).

4. Coffee machine according to claim 3, in which the spacing (b) of the pressure elements (9a, 9b) from one another is smaller than the width (a) of the curved section (5a) passing through the opening (10).

5. Coffee machine according to claim 4, in which the pressure device (9) includes a passage opening (10), which is bounded by two opposite stationary pressure elements (9a, 9b) and which is open at a circumferential side (10a), which extends transversely to the pressure elements, for insertion of the curved section (5a).

6. Coffee machine according to claim 4, in which the spacing (b) of the pressure elements (9a, 9b) is adjustable.

7. Coffee machine according to claim 6, in which at least one of the pressure elements (9a, 9b) is movable in direction towards the other pressure element (9b, 9a).

8. Coffee machine according to one of claims 1 to 7, which is a device for producing a brewing housing, the device comprises a heater (3) and an overflow (2c) and the heater (3) is connected by the conduit (5) with the overflow (2).

9. Method of connecting a conduit (5) in a coffee machine (1) with a component (2c), wherein the connection is effected by way of a curved section (5a), wherein the conduit (5) is initially bent to form the curved section (5a) and is subsequently pressed transversely to the longitudinal direction for removal of a kink (8) in the curved section (5a).

10. Method according to claim 10, in which the curved section (5a) is pressed for removal of the kink (8) in a passage opening (10) which is narrower than the curved section (5a) at this place.

## Revendications

1. Machine à café (1) avec un conduit (5) qui présente une section coudée (5a) obtenue par pliage, un dispositif de pression (9) qui agit sur le conduit (5) transversalement par rapport au sens longitudinal étant prévu dans la zone de la section coudée (5a).

2. Machine à café selon la revendication 1, dans laquelle le dispositif de pression (9) agit sur le conduit (5) transversalement par rapport au sens de la courbure.

3. Machine à café selon la revendication 1 ou 2, dans laquelle le dispositif de pression (9) contient deux éléments de pression (9a, 9b) opposés, en particulier des surfaces de pression, qui délimitent un orifice de passage (10) pour le conduit (5).

4. Machine à café selon la revendication 3, dans laquelle la distance (b) entre les éléments de pression (9a, 9b) est inférieure à la largeur (a) de la section coudée (5a) qui traverse l'orifice (10).

5. Machine à café selon la revendication 4, dans laquelle le dispositif de pression (9) contient un orifice de passage (10) délimité par deux éléments de pression (9a, 9b) opposés fixes, lequel est ouvert, sur un côté périphérique (10a) transversal par rapport aux éléments de pression, pour insérer la partie coudée (5a).

6. Machine à café selon la revendication 4, dans laquelle la distance (b) entre les éléments de pression (9a, 9b) est réglable.

7. Machine à café selon la revendication 6, dans laquelle au moins l'un des éléments de pression (9a, 9b) est déplaçable en direction de l'autre élément de pression (9b, 9a).

8. Machine à café selon l'une des revendications 1 à 7, laquelle est un dispositif pour réaliser une enceinte de chauffage, le dispositif comportant un chauffage (3) et un trop-plein (2c), le chauffage (3) étant relié au trop-plein (2) par le conduit (5).

9. Procédé pour raccorder un conduit (5) d'une machine à café à un composant (2c), le raccordement se faisant par l'intermédiaire d'une section coudée (5a), le conduit (5) étant tout d'abord plié pour obtenir la section coudée (5a), puis une pression étant exercée dessus transversalement par rapport au sens longitudinal pour éliminer un pli (8) dans la section coudée (5a).

10. Procédé selon la revendication 9, dans lequel la section coudée (5a), pour éliminer le pli (8), est poussée dans un orifice de passage (10) qui est plus étroit que la section coudée (5a) à cet endroit.
